# EUROPÄISCHE PATENTSCHRIFT

(11) **EP 2 862 045 B1**
(45) Veröffentlichungstag und Bekanntmachung des Hinweises auf die Patenterteilung: **03.10.2018**
(21) Anmeldenummer: 13721293.2
(22) Anmeldetag: 24.04.2013
(51) Int. Cl.: G06F 3/038, G06F 3/03

(54) **VORRICHTUNG UND VERFAHREN ZUM IDENTIFIZIEREN EINES LASERZEIGERS**
APPARATUS AND METHOD FOR IDENTIFYING A LASER POINTER
DISPOSITIF ET PROCÉDÉ D'IDENTIFICATION D'UN POINTEUR LASER

(30) Priorität: 14.06.2012 DE 102012210065
(43) Veröffentlichungstag der Anmeldung: 22.04.2015
(73) Patentinhaber: Robert Bosch GmbH, 70442 Stuttgart (DE)
(72) Erfinder: RANKL, Tobias, 70563 Stuttgart (DE)
(86) Internationale Anmeldenummer: PCT/EP2013/058479
(87) Internationale Veröffentlichungsnummer: WO 2013/185964

(56) Entgegenhaltungen:
- EP-A2- 0 515 015
- US-A- 5 612 736
- US-A1- 2008 029 316
- US-B1- 8 089 455

## Beschreibung

Die Erfindung betrifft eine Vorrichtung zum Identifizieren wenigstens eines Laserzeigers. Weiterhin betrifft die Erfindung ein Verfahren zum Identifizieren wenigstens eines Laserzeigers.

### Stand der Technik

Laserprojektoren ohne Optik mit einer eine Projektionsfläche abtastenden Mikrospiegeleinheit (engl. Scanning Mirror Laser Projector) sind bekannt. Bekannt sind ferner Lichtzeigergeräte, beispielsweise Laserpointer, die beispielsweise eingesetzt werden, um eine Aufmerksamkeit eines Auditoriums auf einen bestimmten Inhalt einer Präsentation zu richten.

Im Stand der Technik sind ferner diverse Medien-Vielfachzugriffsverfahren bekannt.

EP 1 087 327 A2 offenbart ein interaktives Präsentationssteuersystem, in welchem ein Vortragender eine Präsentation durch die Projektion von vorab festgelegten räumlichen Mustern auf eine Projektionsfläche mittels eines von einem Laserpointer emittierten Laserstrahls steuert. Die vorab festgelegten räumlichen Muster werden erfasst und durch das Steuersystem interpretiert, welches daraufhin Anzeigebefehle an einen Projektor ausgibt.

Die US 5,612,736 offenbart ein Verfahren zur Bestimmung der Position eines von einem Laserzeiger ausgesendeten Laserstrahls auf der Projektionsfläche eines Mikrospiegelprojektors. Hierbei wird der auf die Projektionsfläche gerichtete und mit einem PCM-Code modulierte Laserstrahl des Laserzeigers in der Dunkelphase zwischen zwei projizierten Bildern durch pixelweises Abtasten der Projektionsfläche mittels einer Abtastspiegeleinrichtung des Mikrospiegelprojektors und einer im Projektor vorhandenen Fotodiode detektiert.

Die EP 0 515 015 A2 offenbart ein Verfahren zum Interagieren mit einem Computererzeugten Bild.

Die US 2008/029316 A1 offenbart ein Verfahren zur Bestimmung der Position eines von einem Lichtzeiger ausgesendeten Lichtstrahls auf einem Eingabeschirm. Der im Infrarotbereich ausgestrahlte Lichtstrahl trifft auf der Frontfläche des Eingabeschirms auf, und erreicht dann aufgrund von Streuung und Reflexion die Seitenflächen des Eingabeschirms, wo er von Lichtsensoren detektiert wird. Um die Position des Lichtstrahl auf der Frontfläche des Eingabeschirms mit höherer Ortsauflösung bestimmen und den Lichtstrahl besser vom Umgebungslicht unterscheiden zu können, wird der Lichtstrahl vom Lichtzeiger mit einem CDMA-Code moduliert, der im Eingabeschirm mit meinem Korrelator entsprechend demoduliert bzw. dekodiert wird. Dabei kann der verwendete CDMA-Code abhängig vom Betätigungszustand eines Schalters des Lichtzeigers gewählt werden.

### Offenbarung der Erfindung

Gemäß einem ersten Aspekt wird mit der Erfindung eine Vorrichtung zum Identifizieren wenigstens eines Laserzeigers mit den Merkmalen des Patentanspruchs 1 bereitgestellt.

Gemäß einem weiteren Aspekt wird mit der Erfindung ein Verfahren zum Identifizieren wenigstens eines Laserzeigers mit den Merkmalen des Patentanspruchs 8 bereitgestellt.

Bevorzugte Ausführungsformen der Vorrichtung und des Verfahrens sind Gegenstand von Unteransprüchen.

### Vorteile der Erfindung

Ein Vorteil der Erfindung besteht darin, dass es mit der Erfindung möglich ist, Laserlichtpunkte eines oder mehrerer Laserzeiger auf einer Projektionsfläche zu identifizieren und zu lokalisieren. Dadurch kann der Laserzeiger vorteilhaft beispielsweise die Funktion eines Mauszeigers übernehmen, um Bedienungsmenüs des Laserprojektors oder Menüpunkte von Applikationen, die mittels des Laserprojektors projiziert werden, zu selektieren. Vorteilhaft kann die genannte Steuerung im Wesentlichen in Echtzeit ausgeführt werden.

Erfindungsgemäß ist die Modulationseinrichtung zum Steuern der Lichtintensität des mittels des Laserzeigers ausgesendeten Laserstrahls vorgesehen. Dadurch wird vorteilhaft eine kodierte Information über den Laserzeiger mittels eines modulierten Laserlichtstrahls bereitgestellt, die mittels bekannter Technologien dekodierbar ist.

Erfindungsgemäß ist mittels der Modulationseinrichtung ein Mehrfachzugriffsverfahren ausführbar und dabei ein CDMA-Code generierbar. Vorteilhaft wird dadurch ein bewährtes Codierungsverfahren zur Modulation bzw. Kodierung des Laserlichtstrahls des Laserzeigers verwendet.

Erfindungsgemäß weist der Laserzeiger unterschiedliche Funktionalitäten auf, wobei bevorzugt pro Funktionalität ein CDMA-Codegenerator vorgesehen ist. Dadurch wird vorteilhaft eine sichere Funktionsvielfalt der Laserzeiger über unterschiedliche Codes realisiert.

Erfindungsgemäß weist der Laserzeiger Schalter für eine Auswahl der Funktionalitäten auf, wobei die Schalter bevorzugt als mechanische Schalter oder als Bewegungssensoren ausgebildet sind. Dadurch können die Funktionalitäten des Laserzeigers auf unterschiedliche Arten eingestellt bzw. selektiert werden.

Erfindungsgemäß ist in einer Erkennungseinrichtung des Laserprojektors eine Fotodiode angeordnet, wobei von der Projektionsfläche reflektiertes Licht in die Fotodiode eingekoppelt wird. Vorteilhaft wird auf diese Weise ein physikalisches Wellenausbreitungsprinzip des Laserlichts zur Identifizierung des Laserzeigers angewendet und technisch umgesetzt.

Erfindungsgemäß weist die Erkennungseinrichtung ferner eine Korrelationseinrichtung auf, mittels der binäre Daten mit CDMA-Codes korreliert werden können. Dadurch wird das bewährte technische Prinzip der Korrelation zur sicheren Identifizierung bzw. Lokalisierung der Laserzeiger verwendet.

Eine bevorzugte Ausführungsform der Vorrichtung sieht vor, dass die Korrelationseinrichtung mehrere rechenartig angeordnete Korrelatoren aufweist, wobei jeder Korrelator für einen CDMA-Code vorgesehen ist. Mittels eines Rechenempfängers ist vorteilhaft ein schnelles, paralleles Korrelieren von Daten unterstützt.

Eine bevorzugte Ausführungsform der Vorrichtung zeichnet sich dadurch aus, dass jeder der Korrelatoren länger ist als jeder der verwendeten CDMA-Codes. Dadurch kann aufgrund der Länge der Korrelatoren vorteilhaft eine Synchronisation zwischen den CDMA-Codes entfallen, weil eine vollständige zyklische Verschiebung der CDMA-Codes ermöglicht ist.

Erfindungsgemäß werden von der Korrelationseinrichtung ausgegebene Daten mittels einer Positionserkennungseinrichtung mit Positionsdaten der Abtast-Spiegeleinrichtung verknüpft. Dadurch können vorteilhaft eindeutige Positionsdaten für Positionen von Lichtpunkten der Laserzeiger auf der Projektionsfläche erhalten werden.

Eine vorteilhafte Weiterbildung der Vorrichtung sieht vor, dass die Erkennungseinrichtung weiterhin eine Positionsschätzeinrichtung für den wenigstens einen Laserzeiger aufweist, wobei mittels der Positionsschätzeinrichtung Mittelpunkte der Positionsdaten der Positionserkennungseinrichtung geschätzt werden. Auf diese Weise kann vorteilhaft eine Optimierung bzw. Verfeinerung der Positionserkennung für die Lichtpunkte der Laserzeiger durchgeführt werden.

Eine bevorzugte Ausführungsform der Vorrichtung sieht vor, dass der Laserzeiger Laserlicht mit unterschiedlichen Wellenlängen emittiert. Dadurch kann zur Positionserkennung beispielsweise ein für das menschliche Auge ungefährliches Laserlicht stärker ausgestrahlt werden, wodurch die Positionserkennung des Laserzeigers wesentlich genauer und zuverlässiger durchgeführt werden kann.

Eine bevorzugte Ausführungsform der Vorrichtung sieht vor, dass eine Rechnereinrichtung mit dem Laserprojektor verbunden ist, wobei von der Rechnereinrichtung ausgeführte Applikationen mittels des Laserzeigers steuerbar sind. Vorteilhaft kann der Laserzeiger damit zur Steuerung von Applikationen der Rechnereinrichtung verwendet werden, ohne dass eine Kabelverbindung zwischen dem Laserzeiger und der Rechnereinrichtung erforderlich ist.

Weitere Merkmale und Vorteile der vorliegenden Erfindung werden nachfolgend anhand von Ausführungsformen mit Bezug auf die Figuren erläutert. Dabei sind die Figuren vor allem dazu gedacht, die erfindungswesentlichen Prinzipien zu verdeutlichen. In den Figuren bezeichnen gleiche Bezugszeichen gleiche bzw. funktionsgleiche Elemente.

### Kurze Beschreibung der Zeichnungen

Es zeigen:
- Fig. 1: eine prinzipielle Konfiguration einer Ausführungsform der erfindungsgemäßen Vorrichtung;
- Fig. 2: eine prinzipielle Darstellung eines gerichteten optischen Empfängers;
- Fig. 3: eine prinzipielle Darstellung einer Anordnung mit mehreren Laserzeigern;
- Fig. 4: eine prinzipielles Blockschaltbild einer Modulationseinrichtung des erfindungsgemäßen Laserzeigers;
- Fig. 5: prinzipielle Darstellungen von Einrichtungen zur Erzeugung von erfindungsgemäß verwendeten Codes;
- Fig. 6: ein prinzipielles Blockschaltbild einer erfindungsgemäßen Erkennungseinrichtung;
- Fig. 7: ein prinzipielles Blockschaltbild einer Korrelationseinrichtung mit mehreren Korrelatoren;
- Fig. 8: einen prinzipiellen Aufbau eines einzelnen Korrelators; und
- Fig. 9: eine schematische Darstellung einer Wirkungsweise der Positionserkennungseinrichtung und der Positionsschätzeinrichtung.

### Ausführungsformen der Erfindung

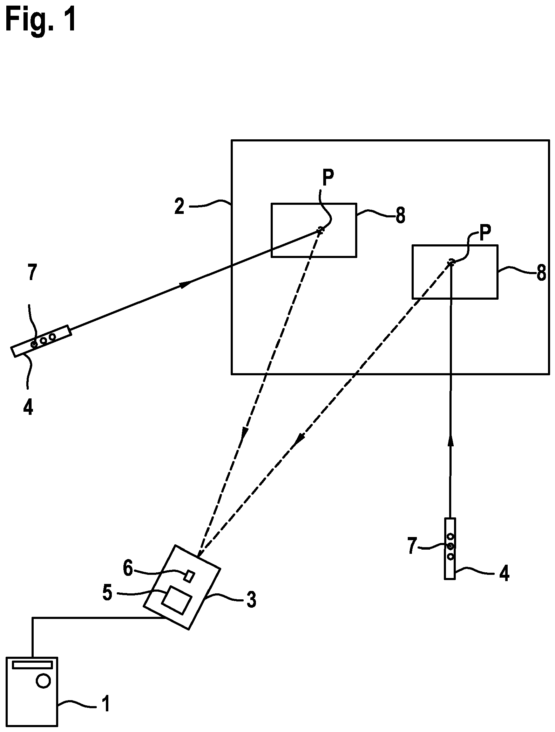

Fig. 1 zeigt eine prinzipielle Gesamtkonfiguration einer Ausführungsform der erfindungsgemäßen Vorrichtung.

Eine Rechnereinrichtung 1 (z.B. Computer, Notebook, Mobiltelefon, Smartphone, usw.) kann an einen Laserprojektor 3 angeschlossen sein. Der Laserprojektor 3 ist als ein sogenannter "Scanning Mirror Laser Projektor" ausgebildet und umfasst eine Abtast-Spiegeleinheit 5, die in der Lage ist, ein Bild (beispielsweise eine von der Rechnereinrichtung 1 ausgeführte Applikation) auf eine Projektionsfläche 2 zu projizieren. Der Laserprojektor 3 lenkt durch eine bewegliche, oszillierende Bewegung der Abtast-Spiegeleinrichtung 5 einen abbildenden Laserlichtstrahl auf die Projektionsfläche 2 und überstreicht diese zyklisch. Dadurch wird stets nur ein einzelner Lichtpunkt abgebildet, wobei durch eine hohe Abbildungsgeschwindigkeit bei einem Beobachter der Eindruck eines vollständigen Bildes entsteht. Ein Bild auf der Projektionsfläche 2 umfasst einen interaktionsfähigen Inhalt 8 (beispielsweise ein Programmfenster, Bedienelemente, Menü, usw.).

Ein oder mehrere Laserzeiger 4 emittieren einen geradlinigen Laserstrahl auf die Projektionsfläche 2, wodurch in einem Auftreffpunkt des Laserstrahls auf der Projektionsfläche 2 ein Lichtpunkt P gebildet wird. Aus Sicherheitsgründen (Laserschutzklassen) sind die Laserzeiger 4 in ihren Ausgangsleistungen begrenzt.Vom Lichtpunkt P wird das Licht als reflektiertes, gedämpftes Streulicht in halbkugelförmigen Wellen (nicht dargestellt) zum Laserprojektor 3 reflektiert. Das reflektierte Streulicht wird in den Strahlengang des Laserprojektors 3 eingekoppelt.

Der Laserzeiger 4 kann mehrere Schalter 7 aufweisen, mit denen Funktionalitäten (z.B. Zeigefunktion, Taste 1, Taste 2, usw.) des Lichtzeigers 4 gesteuert werden können. Die Schalter können 7 ganz oder teilweise als Bewegungssensoren ausgebildet sein, wobei eine Funktionalität durch Druck der Taste 7 oder durch geeignete Bewegung des Laserzeigers 4 gesteuert werden kann.

Für eine Interaktion zwischen dem Laserzeiger 4 und dem Laserprojektor 3 bzw. der Rechnereinrichtung 1 ist es erforderlich, die Position eines vom Laserzeiger 4 erzeugten Lichtpunkts P auf der Projektionsfläche 2 zu kennen. Erst dann kann zwischen verschiedenen aktivierten Funktionalitäten des Laserzeigers 4 und/oder zwischen mehreren Laserzeiger 4 differenziert werden.

Die Erfindung schlägt zu diesem Zweck vor, durch eine Verwendung eines Vielfachzugriffsverfahrens (z.B. CDMA, engl. Code Division Multiple Access) einen Lichtstrahl des Laserzeigers 4 auf der Projektionsfläche 2 identifizierbar zu machen und dessen Position zu bestimmen. Mittels des erfindungsgemäßen Verfahrens ist es vorteilhaft möglich, Kommandos, die vom verwendeten Laserzeiger 4 abgegeben werden, zu erkennen und weiterzuverarbeiten.

Die Erfindung weist Komponenten/Programmbestandteile im Laserzeiger 4, im Laserprojektor 3 und optional in der angeschlossenen Rechnereinrichtung 1 auf. Beispielsweise können auf diese Art und Weise Anwendungsprogramme geöffnet oder geschlossen, Fenster verschoben, Betriebssysteme und Anwendungsprogramme gesteuert und/oder Inhalte in Anwendungsprogrammen erstellt werden, usw.

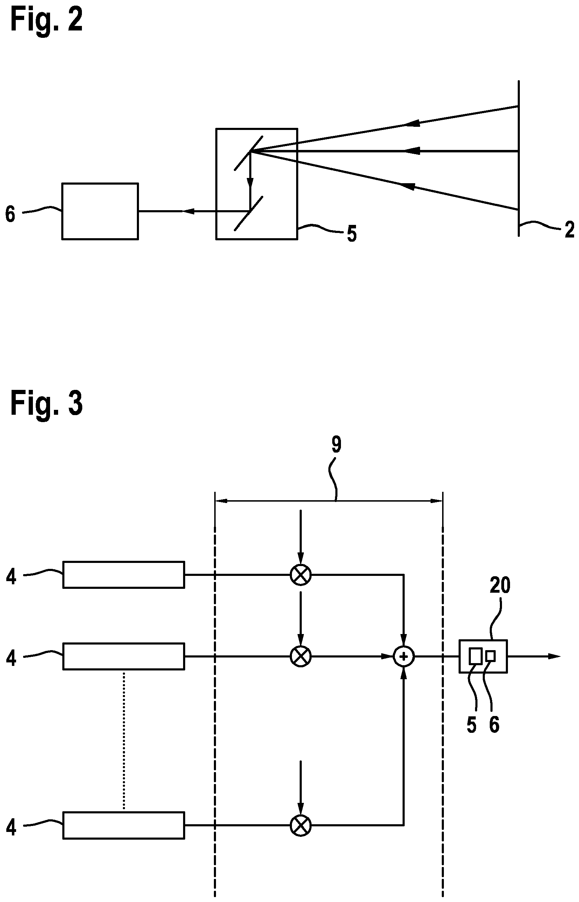

Fig. 2 zeigt schematisch ein Detail des Laserprojektors 3 mit der beweglichen Abtast-Spiegeleinrichtung 5 und einer Fotodiode 6. Die Abtast-Spiegeleinrichtung 5 ist vorzugsweise als eine mikromechanische (MEMS) Spiegeleinheit ausgebildet. Die Fotodiode 6 ist im Empfangs-Strahlengang des Laserprojektors 3 angeordnet. Strahlengänge von gescannten Bereichen der Projektionsfläche 2 werden in den Laserprojektor 3 eingekoppelt und auf der Fotodiode 6 abgebildet.

In der der Projektion entgegengesetzten Richtung arbeitet der Laserprojektor 3 durch die Fotodiode 6 somit als ein gerichteter optischer Empfänger. Eine Richtcharakteristik dieses optischen Empfängers ist derart ausgeprägt, dass stets nur ein kleiner Ausschnitt der Projektionsfläche 2 auf die Fotodiode 6 abgebildet wird. Eine optische Kommunikationsverbindung umfasst im Systemaufbau der vorliegenden Erfindung den Laserzeiger 4 als Sender und den Laserprojektor 3 als Empfänger.

Eine Richtcharakteristik (Ortsauflösung, Ortsempfindlichkeit) des eingesetzten Laserprojektors 3 ist in der Empfangsrichtung schwächer ausgeprägt als in der Projektionsrichtung, wodurch die Ortsauflösung in Empfangsrichtung gegenüber der Projektionsrichtung geringer ausgebildet ist.

Diese Systemeigenschaften verlangen beim Systemdesign einen Kompromiss aus der Größe (d.h. Lichtintensität) des Laserzeigers 4 und der Identifikationsfähigkeit des Systems. Ist der vom Laserzeiger 4 ausgesendete Laserstrahl im Durchmesser zu klein, können die darin kodierten CDMA-Codes nicht vollständig gescannt werden, da die Scanzeit über dem Lichtpunkt P nicht ausreicht. Ist andererseits der vom Laserzeiger 4 ausgesendete Laserstrahl im Durchmesser zu groß, reduziert sich die Ortsauflösung und damit die Genauigkeit der Identifizierung. Ist eine Intensität des Laserzeigers 4 zu gering, kann es zudem passieren, dass die Empfindlichkeit des Empfängers nicht mehr ausreicht, um die CDMA-Codes zu detektieren.

Erfindungsgemäß wird das System unter Berücksichtigung der obengenannten Aspekte also derart ausgelegt, dass sowohl eine hohe Ortsauflösung als auch eine ausreichende Lichtintensität des Laserstrahls des Laserzeigers 4 zur Verfügung steht. In einer Variante können für den Laserstrahl des Laserzeigers 4 zwei unterschiedliche Wellenlängen eingesetzt werden. Eine erste Wellenlänge (z.B. rotes Laserlicht) wird dabei zur optischen Darstellung verwendet, die es einem Nutzer ermöglicht, den Lichtpunkt P gut erkennbar darzustellen. Eine zweite Wellenlänge (z.B. Infrarot-Laserlicht) erzeugt einen größeren (unsichtbaren) Lichtpunkt, der für die Identifikation des Laserzeigers 4 verwendet wird.

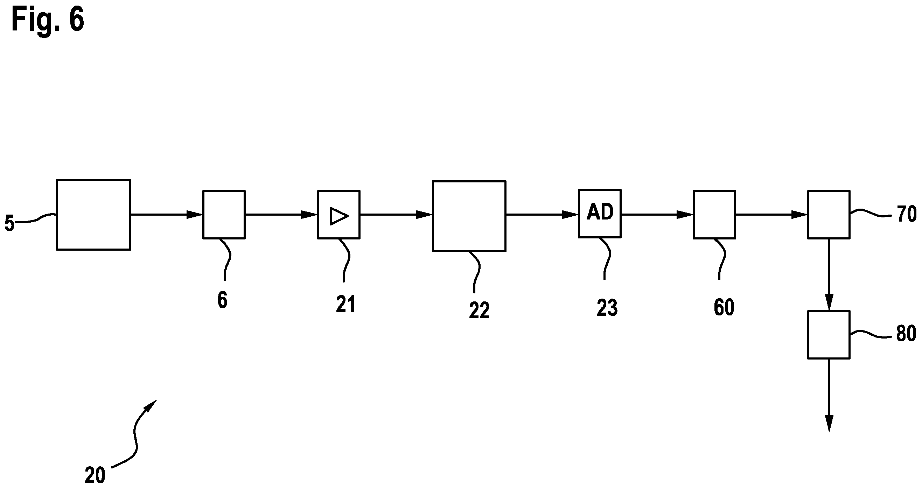

Fig. 3 zeigt ein Blockdiagramm einer Anordnung mit mehreren Laserzeigern 4. Ein Lichtausbreitungspfad 9 von Laserlicht der Laserzeiger 4 ist innerhalb von strichlierten Linien angedeutet. Der Lichtausbreitungspfad 9 ist schematisch als Dämpfung und Superposition dargestellt. Innerhalb des Lichtausbreitungspfads 9 erfahren die Laserstrahlen der Laserzeiger 4 eine Dämpfung. Eine erfindungsgemäße Erkennungseinrichtung 20, die anhand von Fig. 6 noch näher erläutert wird, umfasst neben der Abtast-Spiegeleinrichtung 5 und der Fotodiode 6 noch eine analoge und eine digitale Empfangselektronik (nicht dargestellt). Als ein Ausgangssignal der Erkennungseinrichtung 20 werden Positionsdaten des Laserzeigers 4 zur Weiterverwendung an eine nachfolgende Signalverarbeitung ausgegeben.

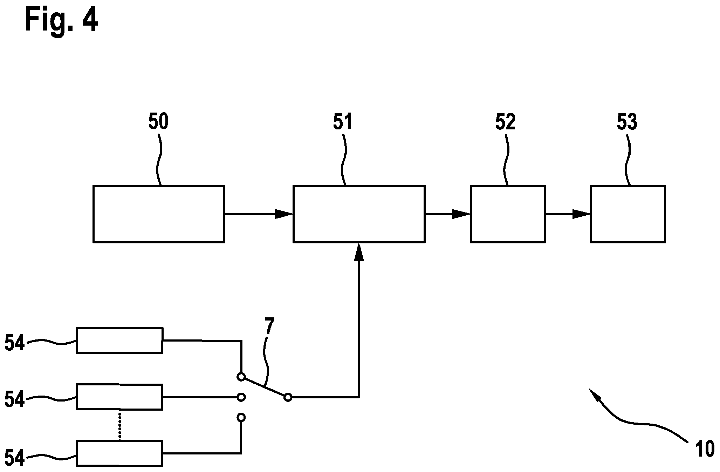

Fig. 4 zeigt ein Blockschaltbild eines prinzipiellen Aufbaus einer Modulationseinrichtung 10 des Laserzeigers 4. Die Modulationseinrichtung 10 umfasst einen Codegenerator 50, der aufgrund einer Selektion durch den Schalter 7 eine Vielzahl von Codes 54 generieren kann. Die Auswahl des zu generierenden Codes 54 wird über Schalter 7 mit spezifischer Betätigungscharakteristik (z.B. Tap, Double-Tap, usw.) oder über einen Bewegungssensor (nicht dargestellt) durchgeführt. Erfindungsgemäß sind die Codes 54 als CDMA-Codes ausgebildet und werden exklusiv oder selten wiederkehrend für jede unterschiedliche Funktionalität des Laserzeigers 4 bzw. für jeden Laserzeiger 4 getrennt generiert.

Der generierte Code 54 wird als eine binäre Sequenz einem Lasertreiber 51 zugeführt, der eine nachgeschaltete Laserdiode 52 ansteuert, welche moduliertes bzw. kodiertes Laserlicht über eine Optik 53 emittiert. Das modulierte Laserlicht wird mittels des Laserzeigers 4 zur Projektionsfläche 2 hin emittiert.

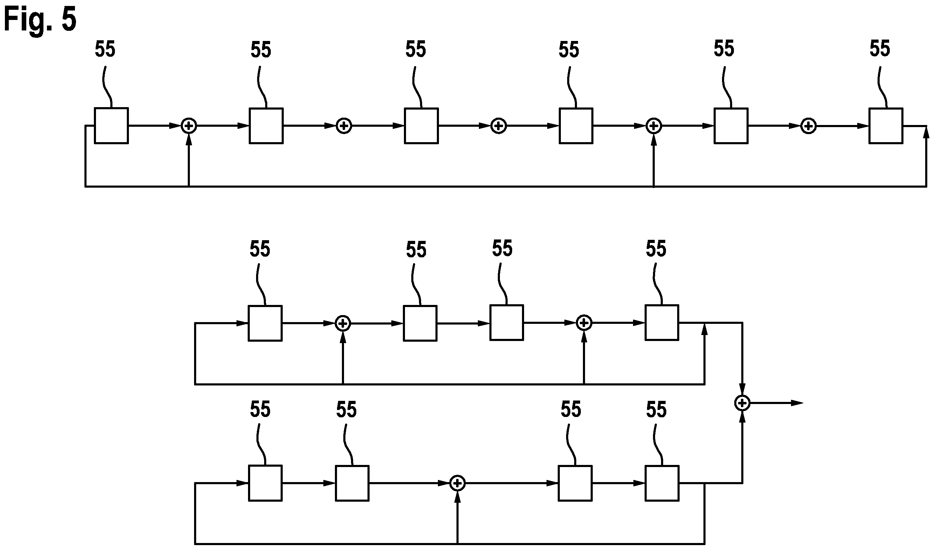

Fig. 5 zeigt anhand zweier schematischer Schaltungsbeispiele, wie die Codes 54 mittels linearer getakteter Schieberegister realisiert werden können. Zu diesem Zweck werden bistabile Speicherelemente 55 (z.B. Speicher Flipflops) unter Verwendung von Rückkopplungszweigen seriell miteinander verschaltet, um Pseudo-Noise Sequenzen zu generieren. Alternativ ist im unteren Bereich der Fig. 5 eine zweite schematische Schaltung dargestellt, mit der mit geringem Aufwand Gold-Sequenzen generiert werden können. Bei den mittels der dargestellten Schaltungen erzeugten Codes handelt es sich um binäre Sequenzen, die gute Kreuzkorrelationseigenschaften aufweisen (wie z.B. Auch m-Sequenzen oder Kasami-Sequenzen). Zu einer Realisierung der genannten Schieberegister ist entweder eine Implementierung mit anwendungsspezifischen Halbleiterschaltungen (ASICs) oder eine Implementierung per Software möglich.

Fig. 6 zeigt ein prinzipielles Blockdiagramm der erfindungsgemäßen Erkennungseinrichtung 20. Das von der Projektionsfläche 2 reflektierte Laserlicht wird in die Abtast-Spiegeleinrichtung 5 eingekoppelt und mittels der Fotodiode 6 in einen elektrischen Strom gewandelt. Ein nachgeschalteter Verstärker 21 (z.B. ein Transimpedanzverstärker) und eine automatische Verstärkungsregelung 22 bereiten die Signale auf, um diese für einen Quantisierungsbereich eines nachgeschalteten Analog/Digital-Wandlers 23 zu optimieren. Eine Korrelationseinrichtung 60 detektiert die im zugeführten Signal enthaltenen CDMA-Codes nach dem Korrelationsprinzip. Eine Positionserkennungseinrichtung 70 rekonstruiert das gescannte bzw. abgetastete Bild durch eine Verknüpfung der von der Abtast-Spiegeleinrichtung 5 gelieferten Positionsdaten mit den von der Korrelationseinrichtung 60 gelieferten Detektionsergebnissen. Eine der Positionserkennungseinrichtung 70 nachgeschaltete Positionsschätzeinrichtung 80 optimiert die von der Positionserkennungseinrichtung 70 ermittelten Positionsdaten des Lichtpunkts P des Laserzeigers 4. Die optimierte Positionsinformation des Lichtpunkts P des Laserzeigers 4 kann nachfolgend an die Rechnereinrichtung 1 und an darauf laufende Anwendungsprogramme übermittelt und von diesen weiterverwendet werden.

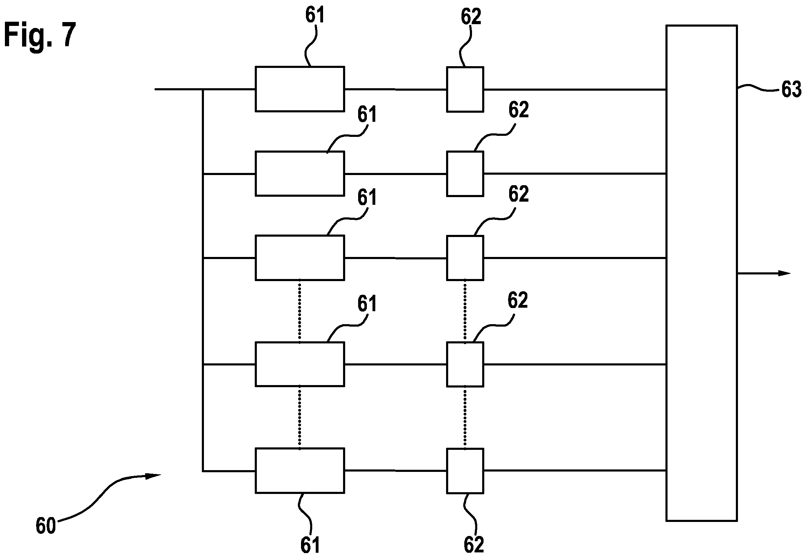

Fig. 7 zeigt in einer detaillierten Prinzipdarstellung einen Aufbau der Korrelationseinrichtung 60. Die Korrelationseinrichtung 60 ist vorzugsweise in Form eines Rechenempfängers (engl. rake receiver) implementiert. Ein derartiger Empfänger weist für jeden möglichen Code einen separaten Empfangszweig auf. Die Korrelationseinrichtung 60 umfasst somit mehrere parallel geschaltete Korrelatoren 61, wobei jeder Korrelator 61 exklusiv für einen Code vorgesehen ist. Mit jedem Korrelator 61 verbundene Schwellwertentscheider 62 sind in ihrem Schwellwert jeweils derart eingestellt, dass eine Erkennung der Codes eindeutig durchgeführt werden kann. Aufgrund der guten Korrelationseigenschaften der CDMA-Codes können die Schwellwerte auf einfache Weise eingestellt werden. In einer Variante sind die Schwellwertentscheider 62 als sogenannte "Softentscheider" implementiert, mit denen Wahrscheinlichkeitswerte zur Entscheidungssicherheit ermittelt werden. Ein nachgeschalteter Multiplexer 63 verknüpft die Detektionsergebnisse der Korrelatoren 61 und übergibt diese an die nachgeschaltete Positionserkennungseinrichtung 70.

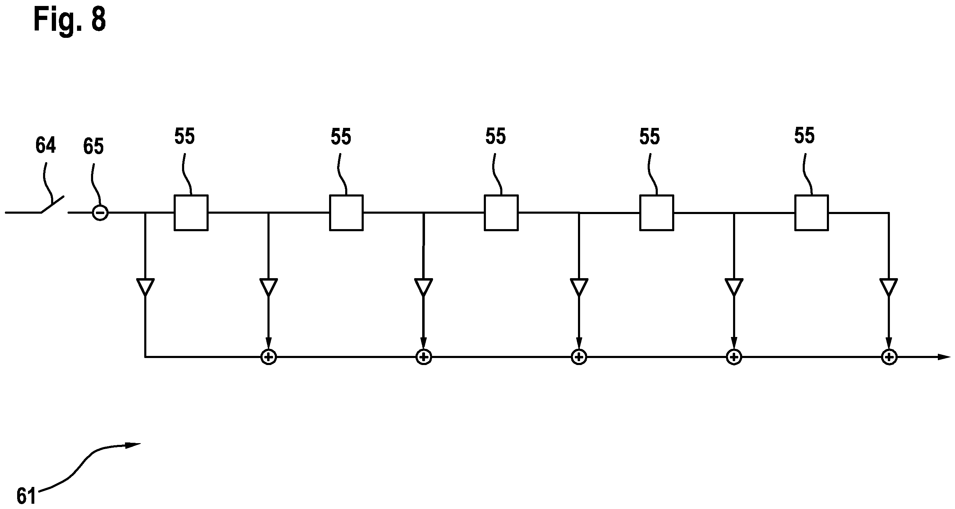

Fig. 8 zeigt in einer detaillierten Prinzipdarstellung den Aufbau eines einzelnen Korrelators 61. Der Korrelator 61 kann beispielsweise als ein Optimalfilter (engl. matched filter) realisiert und als ein Finite-Impulse-Response (FIR) Filter implementiert sein. Alternativ können für derartige Strukturen auch VHDL (engl. Very-high-speed-integrated circuits Hardware Description Language) Modelle verwendet werden. Mittels eines Abtastglieds 64 wird das vom A/D-Wandler 23 zugeführte Eingangssignal abgetastet und nachfolgend mittels eines Offsetglieds 65 mit einem Offset versehen. Der Offset wird eingesetzt, um den Mittelwert des Signals für die Korrelation anzupassen. Die Empfangssignale werden überabgetastet, wodurch eine Code-Synchronisation zwischen dem Laserzeiger 4 und der Erkennungseinrichtung 20 überflüssig wird. Vorzugsweise besitzt die eingesetzte Korrelationssequenz eine größere Länge (z.B. wenigstens die doppelte Länge) als jeder verwendete CDMA-Code.

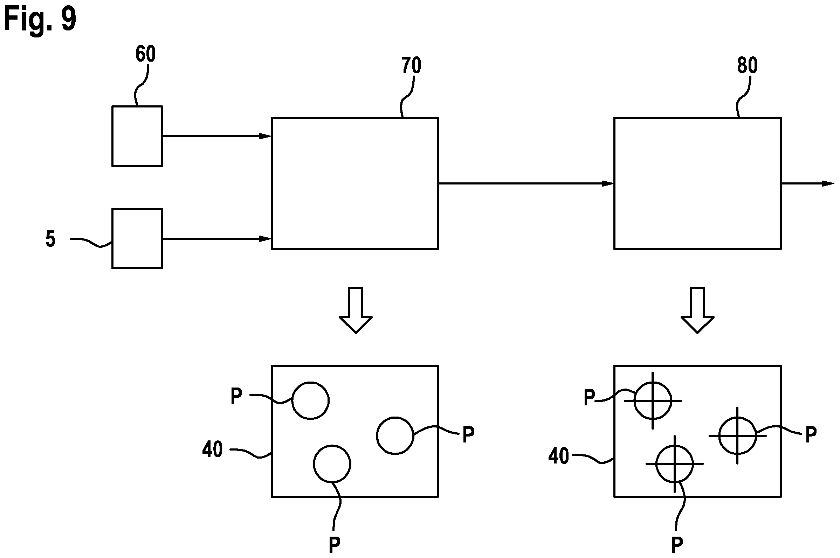

Fig. 9 zeigt schematisch eine Wirkungsweise der Positionserkennungseinrichtung 70 und der nachgeschalteten Positionsschätzeinrichtung 80. Von der Korrelationseinrichtung 60 und der Abtast-Spiegeleinrichtung 5 werden der Positionserkennungseinrichtung 70 Positionsdaten zugeführt. Dies hat zur Folge, dass innerhalb der Positionserkennungseinrichtung 70 die auf der Projektionsfläche 2 abgebildeten Lichtpunkte P des Laserzeigers 4 wieder zu einem Bild 40 zusammengesetzt werden. Die Positionsschätzeinrichtung 80 schätzt danach die Mittelpunkte der Lichtpunkte P bzw. die Bewegungsrichtungen der Laserzeiger 4. Die Positionsschätzeinrichtung 80 kann vorzugsweise auch kürzere Ausfälle des Laserzeigers 4 durch eine Abschattung des Laserstrahls des Laserzeigers 4 kompensieren. Zu diesem Zweck kann beispielsweise ein Kalman-Filter eingesetzt werden.

In einer alternativen Ausführungsform, die nicht Gegenstand der vorliegenden Erfindung ist, kann das Verfahren zur Positionserkennung auch in Space Division Multiple Access (SDMA) Technologie mit einer außerhalb der Abtast-Spiegeleinrichtung 5 angeordneten Fotodiodenmatrix, die nicht notwendigerweise voll bestückt sein muss, realisiert werden.

SDMA Verfahren werden beispielsweise im LTE-Mobilfunkstandard eingesetzt. Die in diesem Verfahren realisierbare Strahlenbündelung (engl. beamforming) kann zur Positionserkennung des Laserzeigers eingesetzt werden. SDMA-Systeme weisen üblicherweise mehrere Sende- und Empfangselemente auf. Im vorliegenden System wären mehrere räumlich verteilte Fotodioden als Empfänger notwendig, um die notwendige Selektivität für die Positionserkennung zu erreichen. Die eingesetzten Fotodioden werden in einer zweidimensionalen Anordnung an fixen Positionen an der Außenseite des Laserprojektors 3 installiert. Eine Integration einer Fotodiode 6 in den Laserprojektor 3 ist nicht notwendig. Im Laserzeiger 4 muss zur Erzielung einer messbaren Phasendifferenz die durch Laufzeitunterschiede hervorgerufen wird, ein HF-Träger eingesetzt werden. Auf diesen wird der CDMA-Code aufmoduliert. Eine geeignete Signalverarbeitung im Empfangsteil ergibt dann die exakte Position. Die Identifikation des Lichtpunkts P des Laserzeigers 4 kann auch in diesem Fall über die CDMA-Codes erfolgen.

Zusammenfassend wird mit der vorliegenden Erfindung eine Vorrichtung und ein Verfahren vorgeschlagen, mithilfe dessen Laserzeiger auf der Projektionsfläche eines Laserprojektors identifiziert und lokalisiert werden können. Das Verfahren erlaubt es vorteilhaft, gleichzeitig mehrere der Laserzeiger ohne erkennbaren zeitlichen Verzug, d.h. im Wesentlichen in Echtzeit zu identifizieren und zu lokalisieren. Das erfindungsgemäße Verfahren erlaubt es weiterhin, gleichzeitig zwischen den von verschiedenen Laserzeigern ausgelösten Aktionen (z.B. Tastendruck) zu unterscheiden.

Kern der Erfindung ist ein Verfahren zur Identifikation und Lokalisation eines oder mehrerer Laser-Lichtzeigereinrichtungen auf einer Projektionsfläche eines Laserprojektors. Die Identifikation der Lichtzeigereinrichtungen wird durch die Verwendung eines Kodierverfahrens mittels CDMA-Codes ermöglicht. Hierzu wird ein von der Laser-Lichtzeigereinrichtung ausgesendeter Laserstrahl mit einem CDMA-Code moduliert. Im Laserprojektor werden in einer Erkennungseinrichtung die durch den Laserzeiger ausgesendeten CDMA-Codes mittels einer Korrelationseinrichtung identifiziert. Die Lokalisation des Laserzeigers wird durch die zeitliche Auflösung der Ortsauflösung des Laserprojektors erreicht. Die Ortsauflösung wird durch die beweglichen Mikro-Spiegel des Laserprojektors und einer geeignet positionierten Fotodiode erreicht. Eine Signalnachverarbeitung optimiert die Identifizierung bzw. Lokalisierung.

Das erfindungsgemäße Verfahren benötigt vorteilhaft keine Synchronisation der Laserzeiger und der Erkennungseinrichtung des Laserprojektors. Bei einer Verwendung von mehreren Laserzeiger erfordert das erfindungsgemäße Verfahren weiterhin vorteilhaft keine Synchronisation der Laserzeiger untereinander. Das Verfahren benötigt vorteilhaft keine Kamera zur Erkennung des Laserzeigers auf der Projektionsfläche.

Mögliche Anwendungen der Erfindung sind: PC-Lasermaus mit sichtbarem Laser, Lasermaus mit IR-Laser, Identifikation des interaktionsberechtigten Laserzeigers, Interaktion mit virtuellen Objekten auf der Projektionsfläche, Interaktion mehrerer Anwender mit dem Computer, interaktive Spiele, usw.

Obwohl die vorliegende Erfindung anhand bevorzugter Ausführungsbeispiele beschrieben wurde, ist sie darauf nicht beschränkt. Insbesondere sind die genannten Schaltungsbeispiele und -topologien nur beispielhaft und nicht auf die erläuterten Beispiele beschränkt.

Der Fachmann wird also die beschriebenen Merkmale der Erfindung in geeigneter Weise abändern oder miteinander kombinieren, ohne dabei von dem in den Patentansprüchen festgelegten Schutzumfang der Erfindung abzuweichen.

## Patentansprüche

1. Vorrichtung zum Identifizieren wenigstens eines Laserzeigers (4), aufweisend:
- einen Laserprojektor (3) mit einer Abtast-Spiegeleinrichtung (5), mittels der eine Projektionsfläche (2) periodisch mit einem Laserlichtstrahl abgetastet werden kann um ein Bild auf die Projektionsfläche (2) zu projizieren;
- den wenigstens einen Laserzeiger (4) mit einer Modulationseinrichtung (10) für einen Laserstrahl des Laserzeigers (4), welcher derart auf die Projektionsfläche (2) richtbar ist, dass der Laserstrahl in einem Auftreffpunkt auf der Projektionsfläche (2) einen Lichtpunkt (P) bildet; und
- eine im Laserprojektor (3) angeordnete Erkennungseinrichtung (20) zum Erkennen des modulierten Laserstrahls des Laserzeigers (4) mit einer Fotodiode (6), in welche von der Projektionsfläche (2) reflektiertes Licht des Laserstrahls des Laserzeigers (4) mittels der Abtast-Spiegeleinrichtung (5) eingekoppelt und in ein elektrisches Signal gewandelt wird;
wobei die Modulationseinrichtung (10) zum Steuern einer Lichtintensität des mittels des Laserzeigers (4) ausgesendeten Laserstrahls vorgesehen ist; wobei der Laserzeiger (4) mehrere Schalter (7) zur Auswahl einer von unterschiedlichen Funktionalitäten des Laserzeigers (4) aufweist; wobei mittels der Modulationseinrichtung (10) eine Vielzahl von CDMA-Codes zur Modulation des von dem Laserzeiger (4) ausgesendeten Laserstrahls generierbar ist, wobei die CDMA-Codes exklusiv für jede unterschiedliche Funktionalität des Laserzeigers (4) generiert werden; wobei die Erkennungseinrichtung (20) eine Korrelationseinrichtung (60) aufweist, mittels welcher der im zugeführten elektrischen Signal enthaltene CDMA-Code nach dem Korrelationsprinzip detektiert wird um den Lichtstrahl des Laserzeigers (4) und die ausgewählte Funktionalität des Laserzeigers (4) zu identifizieren; und wobei von der Korrelationseinrichtung (60) ausgegebene Daten mittels einer Positionserkennungseinrichtung (70) der Erkennungseinrichtung (20) mit Positionsdaten der Abtast-Spiegeleinrichtung (5) verknüpft werden, um eine Position des Lichtpunkts (P) des identifizierten Laserstrahls des Laserzeigers (4) auf der Projektionsfläche (2) zu bestimmen.

2. Vorrichtung nach Anspruch 1, wobei pro Funktionalität des Laserzeigers (4) ein CDMA-Codegenerator (50) in der Modulationseinrichtung (10) ausgebildet ist.

3. Vorrichtung nach Anspruch 2, wobei die Schalter (7) als mechanische Schalter oder als Bewegungssensoren ausgebildet sind.

4. Vorrichtung nach Anspruch 1, wobei die Korrelationseinrichtung (60) mehrere rechenartig angeordnete Korrelatoren (61) aufweist, wobei jeder Korrelator (61) für einen CDMA-Code vorgesehen ist.

5. Vorrichtung nach Anspruch 4, wobei jede der in den Korrelatoren (61) eingesetzten Korrelationssequenzen länger ist als jeder der verwendeten CDMA-Codes.

6. Vorrichtung nach einem der vorhergehenden Ansprüche, wobei der Laserzeiger (4) Laserlicht mit einer ersten sichtbaren Wellenlänge und mit einer unterschiedlichen zweiten unsichtbaren Wellenlänge emittiert, wobei die erste Wellenlänge zur optischen Darstellung des auf der Projektionsfläche (2) gebildeten Lichtpunkts (P) verwendet wird und die zweite Wellenlänge zur Identifikation des Laserzeigers (4) und der ausgewählten Funktionalität des Laserzeigers (4) anhand des jeweiligen CDMA-Code verwendet wird, und wobei die zweite Wellenlänge einen größeren unsichtbaren Lichtpunkt auf der Projektionsfläche (2) erzeugt als der von der ersten Wellenlänge gebildete sichtbare Lichtpunkt (P) auf der Projektionsfläche (2).

7. Vorrichtung nach einem der vorhergehenden Ansprüche, wobei eine Rechnereinrichtung (1) mit dem Laserprojektor (3) verbunden ist, wobei von der Rechnereinrichtung (1) ausgeführte Applikationen mittels des Laserzeigers (4) steuerbar sind.

8. Verfahren zum Identifizieren wenigstens eines Laserzeigers (4), aufweisend die Schritte:
- Abtasten einer Projektionsfläche (2) mit einem Laserlichtstrahl mittels einer Abtast-Spiegeleinrichtung (5) eines Laserprojektors (3) um ein Bild auf die Projektionsfläche (2) zu projizieren;
- Emittieren eines Laserstrahls mittels des wenigstens einen Laserzeigers (4) auf die Projektionsfläche (2) so, dass der Laserstrahl in einem Auftreffpunkt auf der Projektionsfläche (2) einen Lichtpunkt (P) bildet, wobei der Laserstrahl mittels einer Modulationseinrichtung (10) in seiner Lichtintensität moduliert wird; und
- Identifizieren des modulierten Laserstrahls des Laserzeigers (4) mittels einer Erkennungseinrichtung (20) mit einer Fotodiode (6), in welche von der Projektionsfläche (2) reflektiertes Licht des Laserstrahls des Laserzeigers (4) mittels der Abtast-Spiegeleinrichtung (5) eingekoppelt und in ein elektrisches Signal gewandelt wird; wobei die Modulationseinrichtung (10) einen CDMA-Code zur Modulation des mittels des Laserzeigers (4) ausgesendeten Laserstrahls generiert, wobei der CDMA-Code exklusiv ist für jede von unterschiedlichen Funktionalitäten des Laserzeigers (4), welche mittels mehrerer Schalter (4) des Laserzeigers (4) ausgewählt werden; wobei der im zugeführten elektrischen Signal enthaltene CDMA-Code mittels einer Korrelationseinrichtung (60) der Erkennungseinrichtung (20) nach dem Korrelationsprinzip detektiert wird um den Lichtstrahl des Laserzeigers (4) und die ausgewählte Funktionalität des Laserzeigers (4) zu identifizieren; und wobei von der Korrelationseinrichtung (60) ausgegebene Daten mittels einer Positionserkennungseinrichtung (70) der Erkennungseinrichtung (20) mit Positionsdaten der Abtast-Spiegeleinrichtung (5) verknüpft werden, um eine Position des Lichtpunkts (P) des identifizierten Laserstrahls des Laserzeigers (4) auf der Projektionsfläche (2) zu bestimmen.

## Claims

1. Apparatus for identifying at least one laser pointer (4), having:
- a laser projector (3) having a scanning mirror device (5) by way of which a projection surface (2) can be periodically scanned with a laser light beam to project an image onto the projection surface (2);
- said at least one laser pointer (4) having a modulation device (10) for a laser beam of the laser pointer (4), which is able to be directed onto the projection surface (2) such that the laser beam forms a light spot (P) at a point of incidence on the projection surface (2); and
- a detection device (20), arranged in the laser projector (3), for detecting the modulated laser beam of the laser pointer (4) with a photodiode (6), into which light of the laser beam of the laser pointer (4), which is reflected by the projection surface (2), is coupled using the scanning mirror device (5) and converted into an electrical signal;
wherein the modulation device (10) is provided for controlling a light intensity of the laser beam that is emitted by way of the laser pointer (4);
wherein the laser pointer (4) has a plurality of switches (7) for selecting one of various functionalities of the laser pointer (4);
wherein the modulation device (10) is used to be able to generate a multiplicity of CDMA codes for modulating the laser beam that is emitted by the laser pointer (4), wherein the CDMA codes are generated exclusively for each different functionality of the laser pointer (4);
wherein the detection device (20) has a correlation device (60) by way of which the CDMA code contained in the supplied electrical signal is detected in accordance with the correlation principle in order to identify the light beam of the laser pointer (4) and the selected functionality of the laser pointer (4); and
wherein data output by the correlation device (60) are linked, by way of a position detection device (70) of the detection device (20), with position data of the scanning mirror device (5) in order to determine a position of the light spot (P) of the identified laser beam of the laser pointer (4) on the projection surface (2).

2. Apparatus according to Claim 1, wherein embodied in the modulation device (10) is one CDMA code generator (50) per functionality of the laser pointer (4).

3. Apparatus according to Claim 2, wherein the switches (7) are embodied as mechanical switches or as motion sensors.

4. Apparatus according to Claim 1, wherein the correlation device (60) has a plurality of correlators (61) which are arranged in the manner of a rake, wherein each correlator (61) is provided for one CDMA code.

5. Apparatus according to Claim 4, wherein each of the correlation sequences used in the correlators (61) is longer than each of the CDMA codes used.

6. Apparatus according to one of the preceding claims, wherein the laser pointer (4) emits laser light having a visible first wavelength and having a different, invisible second wavelength, wherein the first wavelength is used for optically representing the light spot (P) which is formed on the projection surface (2), and the second wavelength is used for the identification of the laser pointer (4) and the selected functionality of the laser pointer (4) on the basis of the respective CDMA code, and wherein the second wavelength produces an invisible light spot on the projection surface (2) which is larger than the visible light spot (P) on the projection surface (2) that is formed by the first wavelength.

7. Apparatus according to one of the preceding claims, wherein a computer device (1) is connected to the laser projector (3), wherein applications which are executed by the computer device (1) are controllable by way of the laser pointer (4).

8. Method for identifying at least one laser pointer (4), having the steps of:
- scanning a projection surface (2) with a laser light beam by way of a scanning mirror device (5) of a laser projector (3) to project an image onto the projection surface (2);
- emitting a laser beam by way of the at least one laser pointer (4) onto the projection surface (2) such that the laser beam forms a light spot (P) at a point of incidence on the projection surface (2), wherein the laser beam is modulated in terms of its light intensity by way of a modulation device (10); and
- identifying the modulated laser beam of the laser pointer (4) by way of a detection device (20) with a photodiode (6) into which light of the laser beam of the laser pointer (4), which is reflected by the projection surface (2), is coupled using the scanning mirror device (5) and converted into an electrical signal;
wherein the modulation device (10) generates a CDMA code for modulating the laser beam that is emitted by way of the laser pointer (4), wherein the CDMA code is exclusive for each of various functionalities of the laser pointer (4), which are selected by way of a plurality of switches (4) of the laser pointer (4);
wherein the CDMA code contained in the supplied electrical signal is detected by way of a correlation device (60) of the detection device (20) in accordance with the correlation principle in order to identify the light beam of the laser pointer (4) and the selected functionality of the laser pointer (4); and
wherein data output by the correlation device (60) are linked, by way of a position detection device (70) of the detection device (20), with position data of the scanning mirror device (5) in order to determine a position of the light spot (P) of the identified laser beam of the laser pointer (4) on the projection surface (2).

## Revendications

1. Dispositif, destiné à identifier au moins un pointeur laser (4), comportant :
- un projecteur laser (3) doté d'un ensemble de miroirs à balayage (5), au moyen duquel une surface de projection (2) peut être balayée périodiquement par un faisceau lumineux laser, pour projeter une image sur la surface de projection (2) ;
- l'au moins un pointeur laser (4) pourvu d'un système de modulation (10) pour un rayon laser du pointeur laser (4), lequel peut être dirigé sur la surface de projection (2) de telle sorte que, sur un point d'incidence sur la surface de projection (2), le rayon laser forme un point lumineux (P) ;
- et un système d'identification (20) placé dans le projecteur laser (3), destiné à identifier le rayon laser modulé du pointeur laser (4), pourvu d'une photodiode (6) dans laquelle de la lumière du rayon laser du pointeur laser (4) réfléchie par la surface de projection (2) est injectée au moyen de l'ensemble de miroirs à balayage (5) et transformée en un signal électrique ;
le système de modulation (10) étant prévu pour commander une intensité lumineuse du rayon laser émis au moyen du pointeur laser (4) ;
le pointeur laser (4) comportant plusieurs interrupteurs (7), pour la sélection de l'une des différentes fonctionnalités du pointeur laser (4) ;
au moyen du système de modulation (10) une pluralité de codes CDMA pouvant être générée pour la modulation du rayon laser émis par le pointeur laser (4), les codes CDMA étant générés exclusivement pour chaque différente fonctionnalité du pointeur laser (4) ;
le système d'identification (20) comportant un système de corrélation (60) au moyen duquel le code CDMA contenu dans le signal électrique alimenté est détecté selon le principe de corrélation, pour identifier le rayon lumineux du pointeur laser (4) et la fonctionnalité sélectionnée du pointeur laser (4) ; et
des données éditées par le système de corrélation (60) étant interconnectées au moyen d'un système d'identification de position (70) du système d'identification (20) avec des données de position de l'ensemble de miroirs à balayage (5) pour déterminer une position du point lumineux (P) du rayon laser du pointeur laser (4) identifié sur la surface de projection (2).

2. Dispositif selon la revendication 1, par fonctionnalité du pointeur laser (4) un générateur de code CDMA (50) étant conçu dans le système de modulation (10).

3. Dispositif selon la revendication 2, les interrupteurs (7) étant conçus sous la forme d'interrupteurs mécaniques ou de capteurs de déplacement.

4. Dispositif selon la revendication 1, le système de corrélation (60) comprenant plusieurs corrélateurs (61) placés en forme de grille, chaque corrélateur (61) étant prévu pour un code CDMA.

5. Dispositif selon la revendication 4, chacune des séquences de corrélation intégrées dans les corrélateurs (61) étant plus longue que chacun des codes CDMA utilisés.

6. Dispositif selon l'une quelconque des revendications précédentes, le pointeur laser (4) émettant de la lumière laser dans une première longueur d'onde visible et dans une deuxième longueur d'onde invisible différente, la première longueur d'onde étant utilisée pour la représentation optique du point lumineux (P) formé sur la surface de projection (2) et la deuxième longueur d'onde étant utilisée pour l'identification du pointeur laser (4) et de la fonctionnalité sélectionnée du pointeur laser (4) à l'aide du code CDMA respectif, et la deuxième longueur d'onde créant sur la surface de projection (2) un point lumineux invisible plus grand que le point lumineux (P) visible créé sur la surface de projection (2) par la première longueur d'onde.

7. Dispositif selon l'une quelconque des revendications précédentes, un système informatisé (1) étant connecté sur le projecteur laser (3), des applications exécutées par le système informatisé (1) pouvant être commandées au moyen du pointeur laser (4).

8. Procédé, consistant à identifier au moins un pointeur laser (4), comportant les étapes consistant à :
- balayer une surface de projection (2) avec un faisceau lumineux laser, au moyen d'un ensemble de miroirs à balayage (5) d'un projecteur laser (3), pour projeter une image sur la surface de projection (2) ;
- au moyen de l'au moins un pointeur laser (4), émettre un rayon laser sur la surface de projection (2) de telle sorte que sur un point d'incidence sur la surface de projection (2), le rayon laser forme un point lumineux (P), le rayon laser étant modulé dans son intensité lumineuse au moyen d'un système de modulation (10) ; et
- identifier le rayon laser modulé du pointeur laser (4) au moyen d'un système d'identification (20) pourvu d'une photodiode (6), dans laquelle de la lumière du rayon laser du pointeur laser (4) réfléchie par la surface de projection (2) est injectée au moyen de l'ensemble de miroirs à balayage (5) et transformée en un signal électrique ;
le système de modulation (10) générant un code CDMA pour la modulation du rayon laser émis au moyen du pointeur laser (4), le code CDMA étant exclusif pour chacune des différentes fonctionnalités du pointeur laser (4), qui sont sélectionnées au moyen de plusieurs interrupteurs (4) du pointeur laser (4) ;
le code CDMA contenu dans le signal électrique alimenté étant détecté au moyen d'un système de corrélation (60) du système d'identification (20) selon le principe de corrélation, pour identifier le rayon lumineux du pointeur laser (4) et la fonctionnalité sélectionnée du pointeur laser (4) ; et
des données éditées par le système de corrélation (60) étant interconnectées au moyen d'un système d'identification de position (70) du système d'identification (20) avec des données de position de l'ensemble de miroirs à balayage (5), pour déterminer une position du point lumineux (P) du rayon laser du pointeur laser (4) identifié sur la surface de projection (2).
